Europäisches Patentamt

European Patent Office

Office européen des brevets

(11) Publication number: **0 071 914**
**A2**

(12) # EUROPEAN PATENT APPLICATION

(21) Application number: **82106920.0**

(22) Date of filing: **30.07.82**

(51) Int. Cl.³: **B 60 R 13/02**

(30) Priority: **04.08.81 JP 121350/81**

(43) Date of publication of application: **16.02.83**
**Bulletin 83/7**

(84) Designated Contracting States: **DE FR GB**

(71) Applicant: **NISSAN MOTOR COMPANY, LIMITED, No.2, Takara-cho, Kanagawa-ku, Yokohama City (JP)**

(72) Inventor: **Murata, Shigeru, c/o Tsurumi Plant of Nissan Motor Co., Ltd., No. 6-1, Daikoku-cho Tsurumi-ku Yokohama (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 43, D-8000 München 22 (DE)**

(54) **Method and arrangement for securing insulating material between structural panels.**

(57) A burred or otherwise shaped projection on at least one of two structural panels, penetrates into a non-foamed thermoplastic insulating sheet sandwiched between the two panels, holds the sheet in position between the panels and also causes the sheet to be drawn into intimate contact with both of the panels when they are pressed together.

COMPLETE DOCUMENT

# METHOD AND ARRANGEMENT FOR SECURING INSULATING MATERIAL BETWEEN STRUCTURAL PANELS

## BACKGROUND OF THE INVENTION

### Field of the Invention

The present invention relates generally to an insulated structural panel arrangement for use in automotive vehicles or the like and more specifically to an improved arrangement wherein a sheet of insulating material may be secured between two structural panels in a manner which facilitates mass production.

### Description of the Prior Art

In a previously proposed arrangement, a sheet non-foamed thermoplastic insulating material is placed between two panels and sandwiched therebetween via a suitable clamping device. At least one of the panels is provided with suitable dimples which are adapted to permit the panels to be spot welded together. However, this arrangement has suffered from the drawback that, as the panels inevitably have an undulating contour, the sheet of thermoplastic insulator often does not perfectly mate with both of the panels whereby a spacing or air pocket often results therebetween and/or allows the sheet to slip from the intended position thus rending the proper alignment of the spot welding dimples difficult due to the unwanted interposition of the sheet therebetween and/or further allows the sheet to protrude beyond the edges of the structural panels making it very difficult to assemble the panels with other panels during assembly of a vehicle or the like incorporating the insulated structure disclosed hereinbefore.

## SUMMARY OF THE INVENTION

The present invention features the provision of burred or otherwise shaped projections on at least one of two structural panel which penetrate into the thermoplastic sheet interposed between the panels, which hold the sheet in position between the panels and which further cause the sheet to be drawn toward and into intimate contact with both of the panels in question when pressed together.

## BRIEF DESCRIPTION OF THE DRAWINGS

The features and advantages of the arrangement of the present invention will become more clearly appreciated from the following description taken in conjunction with the accompanying drawings in which

Fig. 1 is a perspective view of a pair of structural panels between which a sheet of thermoplastic insulating material is disposed and which are secured in clamping device;

Fig. 2 is a sectional elevation taken along section line III-III of Fig. 1, showing a first embodiment of the present invention;

Fig. 3 is a sectional elevation taken along section line III-III of Fig. 1, showing a second embodiment of the present invention; and

Fig. 4 is a perspective view of a projection which characterizes the second embodiment.

DETAILED DESCRIPTION OF THE PREFERRED EMBODIMENTS

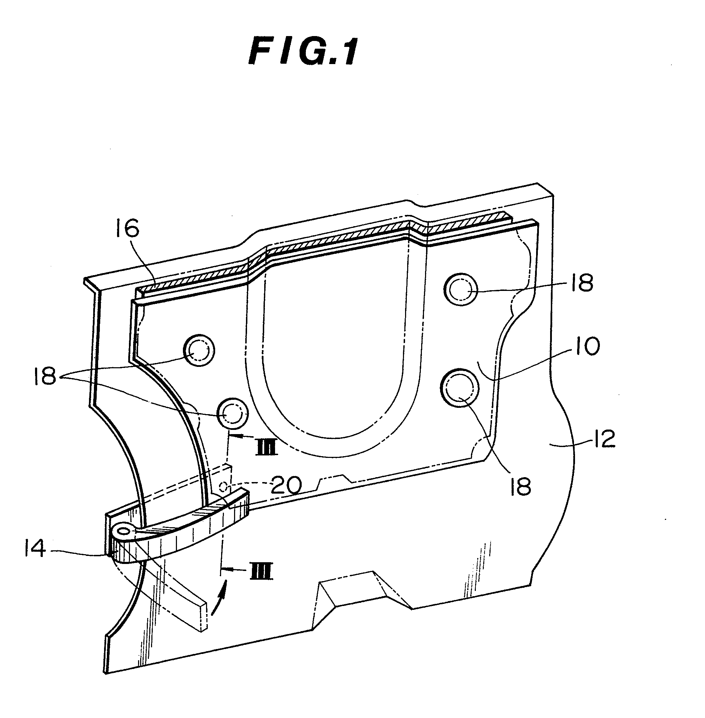

Turning firstly to Fig. 1, first and second structural panels 10, 12 are as shown, held in a suitable clamping device 14. Interposed between the panels is a sheet of thermoplastic non-foamed insulating material 16 which may a sheet of so called "Melsheet" or the like, made from asphalt, asbestos or coal-tar.

The panel 10 is formed with dimples 18 or similar depressions suitable for permitting the two panels to be spot welded together in situ in the clamp 14. The panel 10 is further formed with a plurality of essentially circular or annular inwardly projecting flanges 20 formed by burring holes into the panel. These flanges 20 penetrate or bite into the insulating sheet 16 under the influence of the clamping device 14 which in the illustrated arrangement directly contacts the area in which one of the apertures or holes have been burred. This arrangement not only holds the sheet in a desired position between the two panels 10 and 12 but also forces the sheet to stretch or otherwise deform during the pressing so as to assume the contour of the panels and thus intimately contact same uniformly over the surface thereof. The sheet 16 is preferably formed with apertures 22 therein which allow the dimples 18 to contact the sheet 12 and thus facilitate spot welding. Subsequent to the these operations the resulting product may be removed from the clamping device 14 and subject to subsequent operations such as spray painting and/or baking. The latter mentioned step of course permits the sheet to become slightly fluid and further assume the contour of the panels and securely adhere to same.

It will be appreciated that the flanges 20 should be formed at a suitable distance from the dimples 18 so as to not induce any interference therebetween during production.

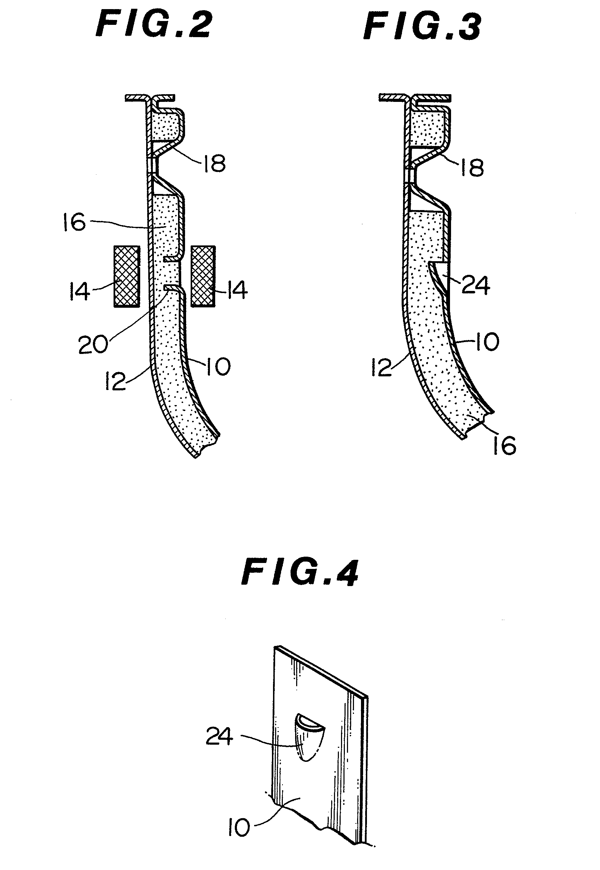

Figs. 3 and 4 show a second embodiment of the present invention. In this embodiment, the inwardly projecting annular flange of the first embodiment is replaced with a "vegetable grater-like" louver 24 which has a sharp edge and which penetrates into the insulating sheet 16 thus producing the same effect as the first embodiment.

It will be also notes that the apertures inherently formed with the present invention also feature the dual purpose of allowing any air or gas to escape therethrough either during pressing or subsequent baking operations.

WHAT IS CLAIMED IS:

1. An insulated panel structure comprising:

a first panel;

a second panel;

a sheet of insulating material sandwiched between said first and second panels; and

means defining a projection on said first panel which pentrates into said sheet and secures same in a predetermined position between said first and second panels.

2. An insulated panel structure as claimed in claim 1, wherein said sheet is non-foamed.

3. An insulated panel structure as claimed in claim 1, wherein said projection takes the form of a flange which extends toward said second panel.

4. An insulated panel structure as claimed in claim 1 wherein said projection takes the form of louver having a sharp edge.

5. An insulated panel structure as claimed in claim 1 further comprising a dimple formed in said first panel which extends toward said second panel and which is adapted to permit said first and second panels to be spot welded together.

6. An insulated panel structure as claimed in claim 5, wherein said sheet is formed with apertures through which said dimples project.

7. An insulated panel structure as claimed in claim 1, wherein said sheet is formed of a thermoplastic material.

8. A method of producing an insulated panel structure comprising the steps of:

forming a projection on a first panel;

placing a sheet of insulating material between said first panel and a second panel;

pressing said first and second panels together to sandwich said sheet between said first and second panels; and

using said projections to maintain said sheet in a predetermined position between said first and second panels.

**FIG.1**

0071914

**FIG.2**    **FIG.3**

**FIG.4**